# EUROPEAN PATENT APPLICATION

(11) **EP 2 815 683 A1**
(43) Date of publication of application: **24.12.2014**
(21) Application number: 14275137.9
(22) Date of filing: 13.06.2014
(51) Int. Cl.: A47J 43/25

(54) **Food grater cutting surface**

(30) Priority: 18.06.2013 US 201361836258 P
(71) Applicant: Browne & Co., Markham, Ontario L3R 1E3 (CA)
(72) Inventor: Ho, Neal, San Francisco, California 94105 (US); Green, David, Toronto, Ontario M4E 3P3 (CA)
(74) Representative: Burt, Matthew Thomas

(57) **Abstract**

A food grater having a cutting with a proximal end and a distal end and a midline has a plurality of teeth formed on the cutting surface. The plurality of teeth each have a cutting edge and form a plurality of rows of teeth positioned between the proximal end and the distal end of the cutting surface. The cutting edges of the teeth and the rows of teeth are configured to urge a food item towards the midline of the cutting surface when the food item is engaged with the cutting surface and moved in contact with the cutting surface in a cutting direction from the proximal end to the distal end of the cutting surface.

## Description

### FIELD

The present matter relates generally to food graters, and more particularly to cutting surfaces of food graters.

### BACKGROUND

Food graters are generally known for the grating, shredding or slicing of various foods, including cheeses and vegetables. Commonly, such graters have either a planar or curved cutting surface with a plurality of teeth or blades extending outward from the cutting surface. As a food item selected to be grated is passed along the cutting surface and over the teeth in the cutting direction, the teeth engage with the surface of the food item and portions of the food item are separated from the food item resulting in grating or shredding of the of the food item. The grated or shredded portions of the food item are of a size which substantially corresponds to the width of the teeth. Larger teeth are used when the food item is to be coarsely shredded or grated, while smaller teeth are suitable for finely shredding or grating the food item.

Food graters of this type typically have the teeth of the cutting surface configured in substantially parallel rows extending across the width of the cutting surface and wherein the rows of teeth are oriented perpendicular to the cutting direction. Fan-like teeth configurations for food graters are also known. However, as forces are applied to the food item both toward the cutting surface and in the cutting direction, typical configurations of the cutting surface of food graters are known to pull the food item away from the cutting direction and out of uniform contact with the teeth of the cutting surface, which can lead to uneven or irregular grating or shredding, or may promote crumbling or breaking apart of the food item rather than the grating or shredding of the food item into uniformly sized food particles.

Typical teeth configurations of grating surfaces do not provide optimal grating or shredding of the food item as it is passed over the cutting surface by requiring the user to exert more force to keep the food item in uniform contact with the cutting surface over its entire length in the cutting direction, or by requiring additional passes over the cutting surface to grate or shred the food item into uniformly sized food particles as desired.

### SUMMARY

A food grater and methods of use thereof is provided for the grating or shredding of food items.

There is described a food grater comprising: a cutting surface having a proximal end, a distal end and a midline running therebetween, and a plurality of teeth, the plurality of teeth each having a cutting edge. The plurality of teeth are configured to operate cooperatively to urge a food item towards the midline of the cutting surface when the food item is engaged with the cutting surface and moved in contact with the cutting surface in a cutting direction.

There is described a food grater comprising: a plurality of cutting surfaces, the plurality of cutting surfaces each having a proximal end, a distal end and a midline running therebetween, and each cutting surface having a plurality of teeth, the plurality of teeth of each cutting surface each having a cutting edge. The plurality of teeth are configured to operate cooperatively to urge a food item towards the midline of each cutting surface when the food item is engaged with said cutting surface and moved in contact said cutting surface in a cutting direction.

There is described a method of manufacturing a cutting surface of a food grater having a plurality of teeth formed on the cutting surface, the plurality of teeth each having a cutting edge, the method comprising: chemically etching a metal blank to define each of the plurality of teeth and to form each cutting edge. The plurality of teeth are configured to operate cooperatively with the midline to urge a food item towards the midline of the cutting surface when the food item is engaged with the cutting surface and moved in contact with the cutting surface in a cutting direction.

There is described a method of grating a food item with a food grater comprising a cutting surface having a proximal end, a distal end and a midline running therebetween, and the cutting surface having a plurality of teeth, the plurality of teeth each having a cutting edge, and wherein the plurality of teeth are configured to operate cooperatively to urge a food item towards the midline of the cutting surface comprising the steps of: selecting a food item to be grated, engaging the food item with the cutting surface, and moving the food item in contact with the cutting surface in the cutting direction.

### BRIEF DESCRIPTION OF THE DRAWINGS

The subject matter is described below with reference to the accompanying drawings, in which:
Figure 1 is a front view of one example of a cutting surface of a food grater;
Figure 2 is an enlarged view of a portion of the cutting surface of the example of Figure 1;
Figure 3 is a front view of an alternate example of the cutting surface of the food grater;
Figure 4 is a photograph of two examples of the food grater.

### DETAILED DESCRIPTION OF THE PREFERRED EMBODIMENTS

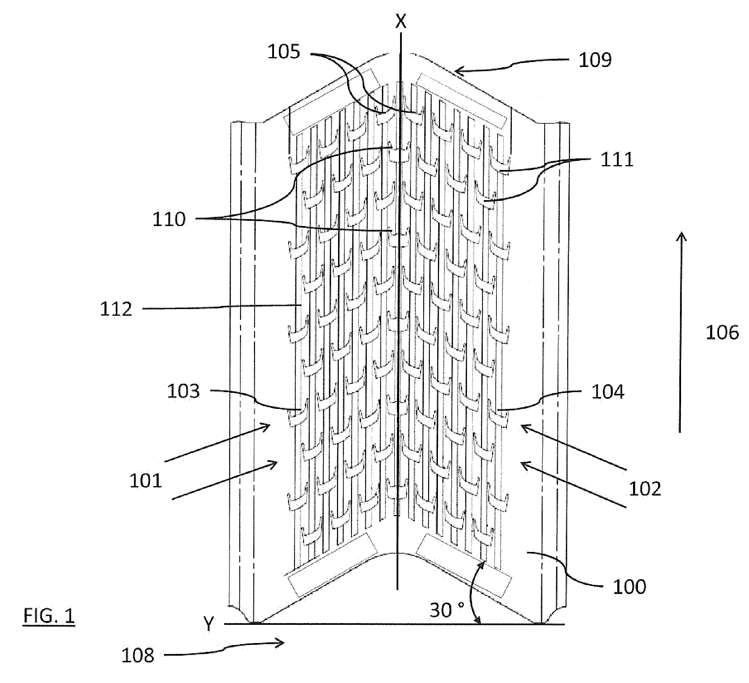

Figure 1 illustrates the cutting surface 100 of a food grater with a proximal end 108 and a distal end 109, and having a plurality of teeth 103 and 104 which in the example shown are configured and oriented to form substantially parallel rows of teeth 101 and 102. Teeth 103 and 104 are integral with the cutting surface 100 but are disposed upward from the cutting surface 100 to form a plurality of gaps 111. Each of the teeth 103 and 104 have a sharpened cutting edge 105. The cutting edge 105 is suitable to engage with a food item (not shown) passed substantially in contact along the cutting surface 100 in a cutting direction 106 such that shredded particles are separated from the food item and disposed through the gaps 111.

Any number of teeth 103 and 104 may be used. Preferably, a plurality of teeth are configured in regular arrangements to form plurality of rows of teeth 101 and 102, with adjacent rows of teeth 101 and 102 being parallel to one another. The rows of teeth 101 and 102 need not have the same number of individual teeth. Moreover, as shown in the example of Figure 1, teeth in adjacent rows of teeth do not align in a single column in the cutting direction 106, but instead are arranged in an offset configuration where only the teeth of alternating rows of teeth 101 and 102 are aligned in the cutting direction 106. An offset configuration can be employed to ensure uniform shredding or grating of the surface of the food item in contact with the cutting surface 100 as it is passed in a cutting direction 106. Alternate configurations of both teeth 103 and 104 and rows 101 and 102 are possible.

In the example of Figure 1, the rows of teeth 101 and 102 are oriented substantially 30° towards the distal end 109 of the cutting surface 100 from the plane Y that runs perpendicular to the midline X of the cutting surface 100 in the cutting direction 106. Other orientations are possible, and the rows of teeth 101 and 102 may be oriented between about 5° to about 85° towards the distal end 109 of the cutting surface from the plane Y that runs perpendicular to the midline X.

As shown in the example of Figure 1, each cutting edge 105 of the teeth 103 and 104 may also be preferably oriented at substantially the same angle as the rows of teeth 101 and 102 as a whole, that is, between about 5° to about 85° towards the distal end 109 of the cutting surface 100 from the plane Y that runs perpendicular to the midline X.

Alternatively, in another example (not shown) the rows of teeth 101 and 102 may be oriented parallel to the plane Y that runs perpendicular to the midline X of the cutting surface 100 in the cutting direction 106 but each cutting edge 105 of the teeth 103 and 104 is oriented at substantially the same angle (between about 5° to about 85°) towards the distal end 109 of the cutting surface 100 from the plane Y.

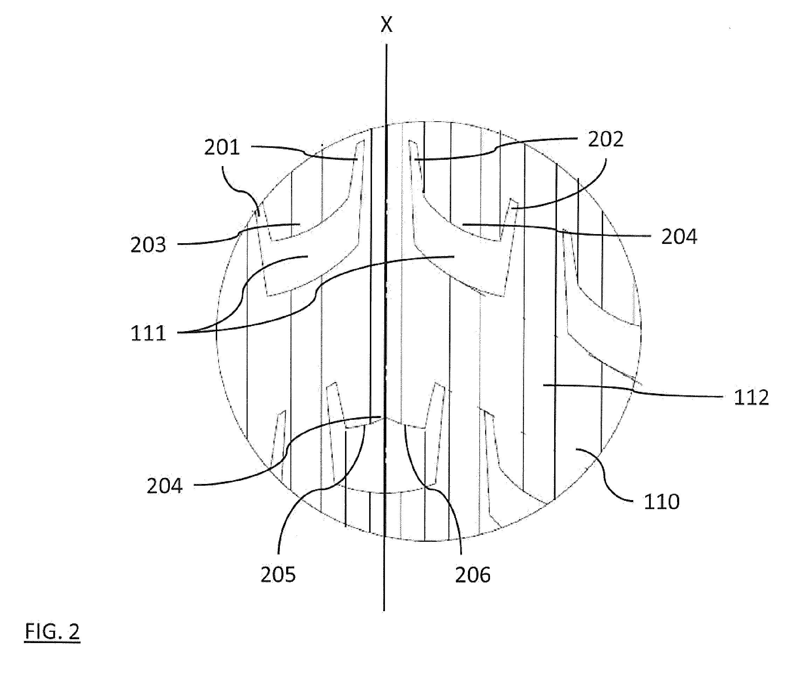

As shown in Figure 2, the gaps 111 of the teeth 103 and 104 may extend to form channels 201 and 202 along the length of the sides of the teeth 103 and 104.

In the example shown in Figure 1, central teeth 110 may be disposed upward from the cutting surface 100 along the midline X of the cutting surface 100 to join rows 101 and 102 of the opposing rows of teeth. As shown in Figure 2, the cutting edge 204 of central teeth 110 may consist of a first portion 205 oriented substantially parallel to the cutting edge of teeth 103 and a second portion 206 substantially parallel to the cutting edge of teeth 104 cutting edge 204 forms a V-shape about the midline X of the cutting surface 100.

The cutting edge 105 of teeth 103 and 104 is suitable to engage with a food item (not shown) moved along and substantially in contact with the cutting surface 100 in a cutting direction 106, such that food particles shredded or grated from the food item by the teeth 103 and 104 are separated from the food item and displaced through the gaps 111 and released from the food item on the underside of the cutting surface 100.

When a food item is passed substantially in contact along the cutting surface 100 in the cutting direction 106, the angled rows of teeth 101 and 102 consisting of teeth 103 and 104 engage the food item and operate cooperatively to urge the food item towards the midline X of the cutting surface 100 as it is grated or shredded.

The cutting surface 100 or 300 may also be provided with one or more grooves (e.g. 112) extending along a portion or the entire length of the cutting surface from the proximal end 108 to the distal end 109. Each of the grooves refers to a portion of the cutting surface 100 that has been removed and that results in the grating surface 100 having a cross-sectional profile at the position of each groove that includes an indentation or cut away portion. The inclusion of a groove (e.g. 112) causes less friction to occur when a food item is brought into contact with the cutting surface 100 or 103 and moved along it in the cutting direction 106. The configuration of such grooves and their manufacture are known. For example, U.S. Patent Application No. 12/974,481 (Publication No. 20120153062-A1 of June 21, 2012) entitled "FOOD GRATER" describes configurations of such grooves on food graters and describes methods of manufacture thereto which is incorporated herein by reference in its entirety.

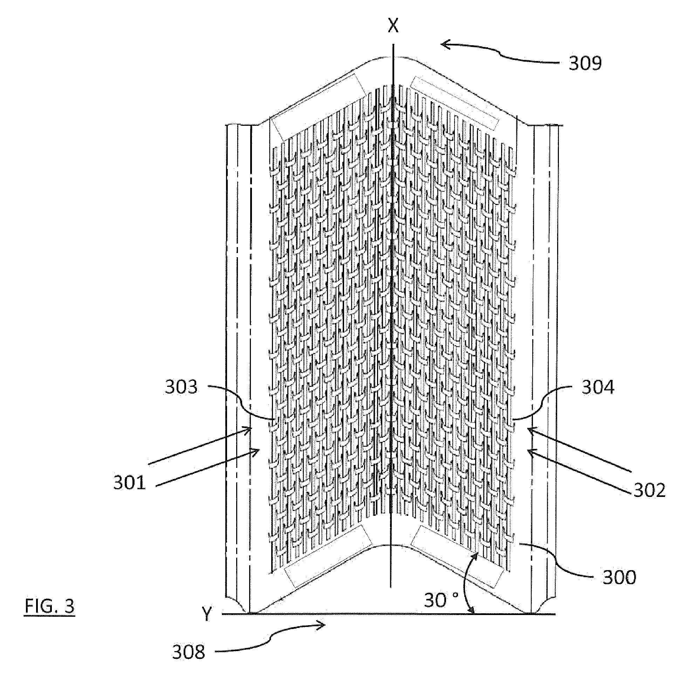

In the example of Figure 3, the cutting surface 300 of a food grater with a proximal end 308 and a distal end 309, and having a plurality of substantially parallel rows of teeth 301 and 302 is shown. As in the example of Figure 1, teeth 303 and 304 are integral with the cutting surface 300 but are disposed upward from the cutting surface 100 to form a plurality of gaps 311. Each of the teeth 303 and 304 have a sharpened cutting edge 305. The teeth 303 and 304 are narrower in width, and are spaced in a tighter configuration within the rows 301 and 302 than in the example of Figure 1. Similarly, parallel rows of teeth 301 and 302 are spaced in a tighter configuration with respect to adjacent rows than in the example of Figure 1. Such a configuration is suitable for finely shredding or grating the food item.

The cutting surfaces 100 and 300 of Figures 1 and 3, respectively, are represented as being rectangular in shape; however, they may alternatively be triangular, trapezoidal or otherwise shaped. Further, the cutting surface 100 and 300 may be substantially flat or planar. Alternatively, the cutting surfaces 100 and 300 may be bowed inward (concave) or bowed outward (convex) in either a rounded fashion or bent inward or outward to form a "v-shape" of the cutting surface 100 or 300 as a whole about the midline X. Other shapes and configurations may be adopted.

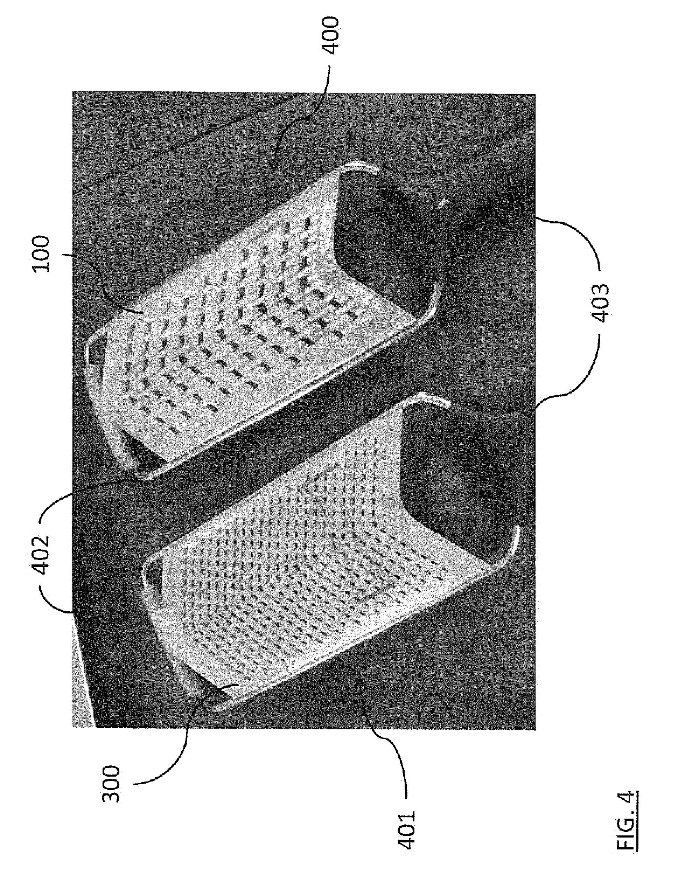

As shown in Figure 4, the cutting surfaces 100 or 300 may be assembled or otherwise incorporated into a hand held food grater 400 or 401. In this example, the cutting surface 100 or 300 is secured to a wire frame 402 to which a grip or handle 403 is also secured. Similarly, the cutting surface 100 or 300 may be assembled or otherwise incorporated into other types of rasps, hand rotary graters, or box or pyramid grater or any other form of grater comprising suitable frame and/or grip elements.

The cutting surface 100 or 300 may be manufactured from a blank of stainless steel or any other suitable metal, alloy or material. Stainless steel is well suited to food preparation equipment and is further suitable for defining sharp cutting edges of teeth on a cutting surface. The blank is manufactured to form a plurality of openings in the blank that define the plurality of rows of teeth 101 and 102. The openings may be formed by a stamping process, an etching process, or any other known technique or combination of techniques. When the openings are formed in the blank, the blank may be stamped, bent or otherwise manufactured so that the teeth 103 and 104 are disposed upward from the plane of the cutting surface 100.

Other configurations of the rows of teeth 101 and 102, teeth 103 and 104, and cutting edges 105 which cooperate to draw the food item towards the midline X of the cutting surface 100 are possible. For example, the configuration of rows of teeth and teeth on the cutting surface 100 shown in the example of Figure 1 may be repeated or arranged in a substantially contiguous fashion on a single blank. That is, a single blank may be provided with more than one cutting surfaces 100, with the blank having more than one midline X and rows of teeth, wherein the rows of teeth, each cutting edge of the teeth, or both, may be oriented between about 5° to about 85° towards the distal end of the cutting surface from the plane Y that runs perpendicular to the more than one midline X in the cutting direction.

The cutting surface, food grater, and methods of use thereof have been described herein with regard to certain examples. However, it will be apparent to persons skilled in the art that a number of variations and modifications can be made thereto. The scope of the claims should not be limited by the specific examples presented, but should be given the broadest interpretation consistent with the description as a whole.

## Claims

1. A food grater comprising:
a cutting surface having a proximal end, a distal end and a midline running therebetween, and the cutting surface having a plurality of teeth, the plurality of teeth each having a cutting edge; and
wherein the plurality of teeth are configured to operate cooperatively to urge a food item towards the midline of the cutting surface when the food item is engaged with the cutting surface and moved in contact with the cutting surface in a cutting direction.

2. The food grater of claim 1 wherein the teeth are divided into a first set of teeth and a second set of teeth by the midline of the cutting surface wherein each cutting edge of the first set of teeth and each cutting edge of the second set of teeth are oriented between 5° and 85° from a plane that runs perpendicular to the midline of the cutting surface in the cutting direction.

3. The food grater of claim 2 wherein the first set of teeth and the second set of teeth are configured to form a plurality of rows of teeth positioned between the proximal end and the distal end of the cutting surface.

4. The food grater of claim 3 wherein the plurality of rows of teeth are divided into a first set of rows of teeth and a second set of rows of teeth by the midline of the cutting surface and the first set of rows of teeth and second set of rows of teeth are oriented between 5° and 85° from a plane that runs perpendicular to the midline of the cutting surface in the cutting direction.

5. The food grater of any one of claims 1-4 wherein the plurality of teeth and each cutting edge of the plurality of teeth are formed by a stamping process or chemical etching techniques.

6. The food grater of any one of claims 1-5 wherein the cutting surface is mounted to a frame.

7. The food grater of any one of claims 1-6 further comprising a grip.

8. A food grater comprising:
a plurality of cutting surfaces, the plurality of cutting surfaces each having a proximal end, a distal end and a midline running therebetween, and each cutting surface having a plurality of teeth, the plurality of teeth of each cutting surface each having a cutting edge; and
wherein the plurality of teeth are configured to operate cooperatively to urge a food item towards the midline of each cutting surface when the food item is engaged with said cutting surface and moved in contact said cutting surface in a cutting direction.

9. The food grater of claim 8 wherein the plurality of cutting surfaces are arranged in a contiguous configuration.

10. A method of manufacturing a cutting surface of a food grater having a plurality of teeth formed on the cutting surface, the plurality of teeth each having a cutting edge, the method comprising:
chemically etching a metal blank to define each of the plurality of teeth and to form each cutting edge, wherein the plurality of teeth are configured to operate cooperatively to urge a food item towards a midline of the cutting surface when the food item is engaged with the cutting surface and moved in contact with the cutting surface in a cutting direction.

11. A method of grating a food item with a food grater comprising a cutting surface having a proximal end, a distal end and a midline running therebetween, and the cutting surface having a plurality of teeth, the plurality of teeth each having a cutting edge, wherein the plurality of teeth are configured to operate cooperatively to urge a food item towards the midline of the cutting surface comprising the steps of:
selecting a food item to be grated;
engaging the food item with the cutting surface; and
moving the food item in contact with the cutting surface in the cutting direction.
